(19) Europäisches Patentamt
European Patent Office
Office européen des brevets

(11) EP 3 053 441 A1

(12) EUROPEAN PATENT APPLICATION

(43) Date of publication:
**10.08.2016 Bulletin 2016/32**

(21) Application number: **16155033.0**

(22) Date of filing: **26.11.2009**

(51) Int Cl.:
***A01N 43/40*** *(2006.01)*
***A01P 1/00*** *(2006.01)*
***A01P 3/00*** *(2006.01)*
***A01N 47/14*** *(2006.01)*
***A01N 59/16*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **27.11.2008 EP 08170087**

(62) Document number(s) of the earlier application(s) in accordance with Art. 76 EPC:
**09759949.2 / 2 369 928**

(71) Applicant: **Janssen Pharmaceutica NV**
**2340 Beerse (BE)**

(72) Inventors:
- **BOSSELAERS, Jan Pieter Hendrik**
  **2340 Beerse (BE)**
- **BYLEMANS, Dany Leopold Jozefien**
  **2340 Beerse (BE)**
- **KEMPEN, Tony Mathilde Jozef**
  **2340 Beerse (BE)**

(74) Representative: **Verberckmoes, Filip Gerard et al**
**Janssen Pharmaceutica N.V.**
**J&J Patent Law Department**
**Turnhoutseweg 30**
**2340 Beerse (BE)**

Remarks:
This application was filed on 10-02-2016 as a divisional application to the application mentioned under INID code 62.

# (54) BIOCIDAL COMPOSITION COMPRISING A THIOL GROUP MODULATING ENZYME INHIBITOR AND PYRION COMPOUND

(57) The present invention relates to combinations of a thiol group modulating enzyme inhibitor and a pyrion compound which provide an improved protecting effect against fouling organisms, fungi or bacteria. More particularly, the present invention relates to compositions comprising a combination of the thiol group modulating enzyme inhibitor zineb together with the pyrion compound zinc pyrithione; in respective proportions to provide a synergistic effect against fouling organisms, fungi or bacteria and the use of these compositions for protecting materials against fouling organisms, fungi or bacteria.

EP 3 053 441 A1

## Description

The present invention relates to combinations of a thiol group modulating enzyme inhibitor and a pyrion compound which provide an improved protecting effect against fouling organisms, fungi or bacteria. More particularly, the present invention relates to compositions comprising a combination of a thiol group modulating enzyme inhibitor selected from dichlofluanid, tolylfluanid, dithane, thiram, ziram, or zineb, together with a pyrion compound selected from 1-hydroxy-2-pyridinone, ciclopirox, ciclopirox olamine, piroctone, piroctone olamine, rilopirox, pyrion disulfide, sodium pyrithione and zinc pyrithione; in respective proportions to provide a synergistic effect against fouling organisms, fungi or bacteria and the use of these compositions for protecting materials against fouling organisms, fungi or bacteria.

JP-08-092012 discloses antimicrobial compositions comprising nitrile, pyridine, haloalkylthio, organic iodine and thiazole type antimicrobial agents. The pyridine type antimicrobial agents comprise pyridine thiol-1-oxide compounds such as sodium pyrithione and the haloalkylthio type antimicrobial agents comprise haloalkyl thiosulfamide compounds such as dichlofluanide.

It has now been found that the combination of a thiol group modulating enzyme inhibitor selected from dichlofluanid, tolylfluanid, dithane, thiram, ziram, or zineb (hereinafter referred to as component I) and a pyrion compound selected from 1-hydroxy-2-pyridinone, ciclopirox, ciclopirox olamine, piroctone, piroctone olamine, rilopirox, pyrion disulfide, sodium pyrithione and zinc pyrithione (hereinafter referred to as a component II), has a synergistic effect on the control of fouling organisms, fungi or bacteria, provided that a combination of dichlofluanid as component (I) and sodium pyrithione as component (II) is excluded. As used herein, "control" is defined to include the inhibition of attachment or settlement of fouling organisms, fungi or bacteria to the surface of an object, the removal of said organisms that are attached to the surface of an object, and the growth of said organisms.

The thiol group modulating enzyme inhibitors, component (I), are:

- dichlofluanide (component I-a) has a broad spectrum antimicrobial activity and is used against wood-staining fungi in wood coatings and primers. It is the generic name of the compound 1,1-dichloro-*N*-[(dimethylamino)sulfonyl]-1-fluoro-*N*phenyl-methanesulfenamide, which may be represented by the formula

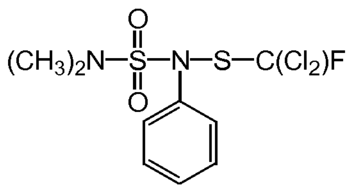

(I-a)

- tolylfluanide (component I-b) has a similar activity as dichlofluanide but is better soluble in organic solvents and therefore easier to incorporate in coating formulations and impregnation agents. It is the generic name of the compound 1,1-dichloro-*N*-[(dimethylamino)sulfonyl]-1-fluoro-*N*-(4-methylphenyl)-methane-sulfenamide, which may be represented by the formula

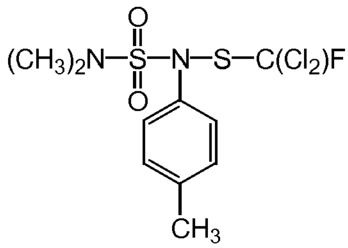

(I-b)

- dithane (component I-c) (CAS 142-59-6) is the generic name of the compound N,N'-1,2-ethanediylbis-carbamodithioic acid sodium salt (1:2), which may be represented by the formula

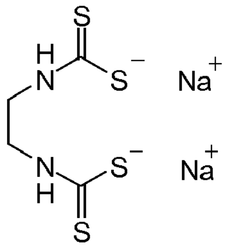 (I-c)

- thiram (component I-d) (CAS 137-26-8) is the generic name of the compound N,N,N',N'-tetramethyl-thioperoxydicarbonic diamide, which may be represented by the formula

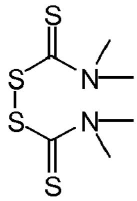 (I-d)

- ziram (component I-e) (CAS 137-30-4) is the generic name of the compound bis(dimethylcarbamodithioato-S,S')-zinc, which may be represented by the formula

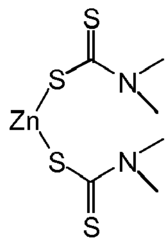 (I-e)

- zineb (component I-f) (CAS 12122-67-7) is the generic name of the compound zinc ethylenebis(dithiocarbamate), which may be represented by the formula

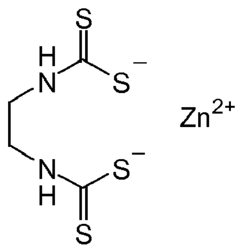 (I-f)

The hydroxypyridones (II) have the following structure :

| | |
|---|---|
| 1-hydroxy-2-pyridinone (II-a) (CAS 822-89-9) | 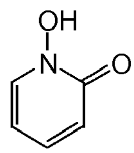 (II-a) |

(continued)

| | |
|---|---|
| ciclopirox (II-b (CAS 29342-05-0) | 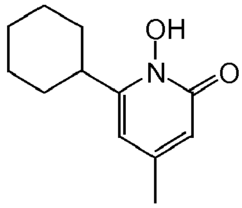 (II-b) |
| ciclopirox olamine (II-c) (CAS 41621-49-2) | 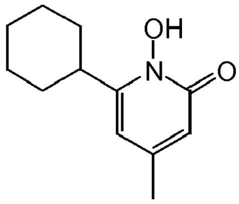 $H_2N-CH_2-CH_2-OH$ (II-c) |
| piroctone (II-d) (CAS 50650-76-5) | 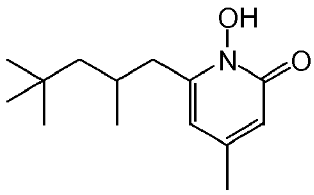 (II-d) |
| piroctone olamine (II-e) (CAS 68890-66-4) | 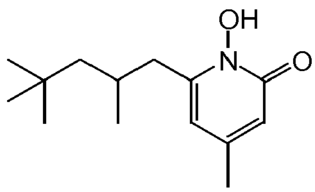 $H_2N-CH_2-CH_2-OH$ (II-e) |
| rilopirox (II-f) (CAS 104153-37-9) | 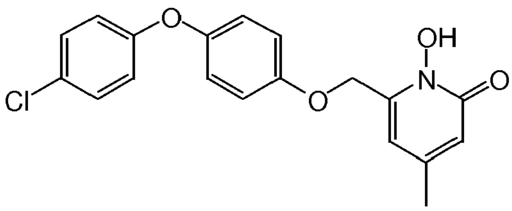 (II-f) |
| pyrion disulfide, also known as bispyrithione (II-g) (CAS 3696-28-4) | 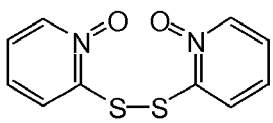 (II-g) |
| sodium pyrithione (II-h) (CAS 3811-73-2) | 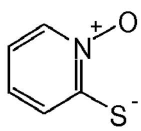 $.Na^+$ (II-h) |
| zinc pyrithione (II-i) (CAS 13463-41-7) | 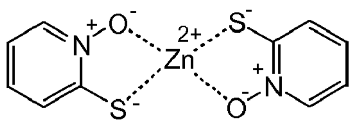 (II-i) |

1-Hydroxy-2-pyridinone, component (II-a) and zinc pyrithione (II-i) are antimycotic agents that can be used in antidandruff shampoos.

Surfaces or objects exposed to humid or aqueous environments are readily colonized by aquatic organisms such as algae, fungi, bacteria, microbes, and aquatic animals such as, e.g. tunicates, hydroids, bivalves, bryozoans, polychaete worms, sponges, barnacles, and molluscs. As these organisms settle on or attach to said surfaces, the value of the exposed objects diminishes. The attachment or settlement of said organisms is also known as 'fouling' of a structure. The exterior, but possibly also the interior of the object may deteriorate, the surface changes, e.g. from smooth, clean and streamlined to rough, foul and turbulent, the weight of the object increases by the deposit of the organisms and their remnants, and the vicinity of the object may become obstructed or encumbered. The function of the object and system involved lowers and the quality of the aqueous environment deteriorates. The common method of controlling the attachment of fouling organisms is by coating the structure to be protected with a composition which comprises an antifouling agent.

The combinations as claimed in the present invention are especially suitable to protect surfaces or objects in constant or frequent contact with water from fouling or attachment or settlement of algae, by applying to said surfaces or objects a composition comprising a component (I) and a component (II) in respective proportions to provide a synergistic effect against fouling organisms, fungi or bacteria.

Examples of said surfaces or objects are for instance, shiphulls, harbor installations, piers and pilings, drying docks, sluice-gates, locks, mooring masts, buoys, offshore oil rigging equipment, drilling platforms, bridges, pipelines, fishing nets, cables, ballast water tanks, ship reservoirs that draw water from infested bodies of water, recreational equipment, such as surfboards, jet skis, and water skis, and any other object in constant or frequent contact with water.

The invention also provides a method to protect materials, in particular surfaces or objects in frequent or constant contact with water, against fouling organisms by applying to said objects a composition comprising an effective antifouling amount of a combination of a component (I) together with a component (II) wherein the amount of component (I) and component (II) are in respective proportions to provide a synergistic effect against fouling organisms. An "antifouling effective amount" is that amount that will kill or inhibit the growth, reproduction or spread of a significant number of fouling organisms.

The present invention further provides a method of protecting a surface which comprises applying to the surface a composition comprising an effective antifouling amount of a combination of a component (I) together with a component (II) wherein the amount of component (I) and component (II) are in respective proportions to provide a synergistic effect against fouling organisms. An especially important use of the method of the invention comprises a method for inhibiting fouling of a ship's hull, which comprises applying to the hull an antifouling composition in accordance with the invention. Fouling on the hulls of ships for example increases frictional drag with a corresponding decrease in speed and maneuverability and an increase in fuel consumption and increased maintenance costs associated with removal of the fouling.

The compositions comprising a combination of a component (I) together with a component (II) wherein the amount of component (I) and component (II) are in respective proportions to provide a synergistic effect against fouling organisms can be used to protect constructions such as, e.g. swimming pools, baths, cooling water circulation circuits and industrial baths in various installations, e.g. in manufacturing plants or in air-conditioning installations, the function of which can be impaired by the presence and/or the multiplication of fouling organisms. Further examples are buildings and parts of buildings such as floors, outer and inner walls or ceilings, or places suffering from dampness such as cellars, bathrooms, kitchens, washing houses and the like, and which are hot-beds for fouling. Fouling not only is problematic from the viewpoint of hygiene and aesthetics, but also causes economic losses because said buildings and/or decorating materials deteriorate more rapidly than desired.

Another application of the combinations of the present invention is the treatment or disinfection of ballast water to reduce or eliminate the presence of aquatic organisms such as phytoplankton (dinoflagellates and diatoms), crustaceans (crabs, shrimp, copepods, amphipods), rotifers, polychaetes, mollusks, fish, echinoderms, ctenophores, and coelenterates.

The synergistic antifouling compositions of the present invention can also be used in a variety of applications :

- industrial aqueous process fluids, e.g. cooling waters, pulp and paper mill process waters and suspensions, secondary oil recovery systems, spinning fluids, metal working fluids, and the like
- in-tank/in-can protection of aqueous functional fluids, e.g. polymer emulsions, water based paints and adhesives, glues, starch slurries, thickener solutions, gelatin, wax emulsions, inks, polishes, pigment and mineral slurries, rubber latexes, concrete additives, drilling mud's, toiletries, aqueous cosmetic formulations, pharmaceutical formulations, and the like.

The term "fouling organisms" is meant to comprise organisms that attach, settle, grow on or adhere to various kinds of surfaces, in particular in humid or aqueous environments such as, marine waters, fresh waters, brackish waters, rain water, and also cooling water, drainage water, waste water and sewage. Fouling organisms are Algae such as, for example, Microalgae, e.g. *Amphora, Achnanthes, Navicula, Amphiprora, Melosira, Cocconeis, Chlamydomonas, Chlorella, Ulothrix, Anabaena, Phaeodactylum, Porphyridium;* Macroalgae, e.g. *Enteromorpha, Cladophora, Ectocarpus,*

*Acrochaetium, Ceramium, Polysiphonia* and *Hormidium sp.;* fungi; microbes; tunicates, including members of the class Ascidiacea such as *Ciona intestinalis, Diplosoma listerianium,* and *Botryllus schlosseri;* members of the class Hydrozoa, including *Clava squamata, Hydractinia echinata, Obelia geniculata* and *Tubularia larynx;* bivalves, including *Mytilus edulis, Crassostrea virginica, Ostrea edulis, Ostrea chilensia, Dreissena polymorpha* (zebra mussels) and *Lasaea rubra;* bryozoans, including *Electra pilosa, Bugula neritina,* and *Bowerbankia gracilis;* polychaete worms, including *Hydroides norvegica*; sponges; and members of the class Crustacea, including *Artemia,* and Cirripedia (barnacles), such as *Balanus amphitrite*, *Lepas anatifera*, *Balanus balanus, Balanus balanoides, Balanus hameri, Balanus crenatus*, *Balanus improvisus*, *Balanus galeatus*, and *Balanus eburneus*; and *Elminius modestus*, and *Verruca.*

The relative proportions of a component (I) and a component (II) in compositions comprising a combination of a component (I) and a component (II) are those proportions which result in a synergistic effect against fouling organisms, fungi or bacteria when compared to a composition including, as an active ingredient, either a component (I) alone or a component (II) alone. As will be understood by those skilled in the art, the said synergistic effect may be obtained within various proportions of components (I) and (II) in the composition, depending on the kind of fouling organism towards which effect is measured and the substrate to be treated. Based on the teachings of the present application, determination of the synergistic effect of such combinations can be performed according to the procedures of the Poison Plate Assay as described in Experiment 1. As a general rule, however, it may be said that for most fouling organisms, fungi or bacteria the suitable proportions by weight of the amount of component (I) to component (II) in the combinations should lie in the range from 10:1 to 1:10. Particularly, this range is from 8:2 to 2:8, more particularly from 3:1 to 1:3 or 2:1 to 1:2. Another particular ratio of component (I) to component (II) in the compositions of the present invention is a 1:1 ratio between component (I) and one of the components (II).

The quantity of each of the active ingredients in compositions comprising a combination of a component (I) and a component (II) will be so that a synergistic effect is obtained. In particular it is contemplated that the ready to use compositions of the present invention comprise component (I) in an amount of at least 1 wt % based on the total weight of the composition. In particular such ready to use compositions comprise component (I) in an amount from 1 wt% to 40 wt%, or more particular from 3 wt% to 30 wt%, based on the total weight of the composition. The amount of component (II) in said ready to use compositions will be so that a synergistic antifouling effect is obtained. In particular the amount of component (II) may range from 1 wt% to 30 wt%, more particular from 2 wt% to 20 wt% based on the total weight of the dry mass of the composition. In many instances the antifouling compositions to be used directly can be obtained from concentrates, such as e.g. emulsifiable concentrates, suspension concentrates, or soluble concentrates, upon dilution with aqueous or organic media, such concentrates being intended to be covered by the term composition as used in the definitions of the present invention. Concentrates used in the form of a paint composition can be diluted to a ready to use mixture in a spray tank shortly before use.

A composition comprising a combination of a component (I) and a component (II) in respective proportions to provide a synergistic effect against fouling organisms, fungi or bacteria is thus suitably used together with carriers and additives, including wetting agents, dispersing agents, stickers, adhesives, emulsifying agents and the like such as those conventionally employed by the artisan in preparing antifouling compositions. The antifouling compositions of the present invention may further comprise suitable substances known in the art of formulation, such as, for example natural or regenerated mineral substances, solvents, dispersants, surfactants, wetting agents, adhesives, thickeners, binders, antifreeze agents, repellents, colour additives, corrosion inhibitors, water-repelling agents, siccatives, UV-stabilizers and other active ingredients. Suitable surfactants are non-ionic, cationic and/or anionic surfactants having good emulsifying, dispersing and wetting properties. The term "surfactants" will also be understood as comprising mixtures of surfactants.

Antifouling compositions comprising a combination of a component (I) and a component (II) in respective proportions to provide a synergistic effect against fouling organisms, fungi or bacteria may be prepared in any known manner, for instance by homogeneously mixing, coating and/or grinding the combination of active ingredients *(i.e.* component (I) and one of the components (II)), in a one-step or multi-steps procedure, with the selected carrier material and, where appropriate, the other additives such as surface-active agents, dispersants, thickeners, binders, colour additives, corrosion inhibitors and the like.

Suitable carriers for solid formulations, such as dusts, dispersable or flowable powders, are any dispersant that does not adversely affect the active ingredients, for example, clays (for example, kaolin, bentonite, acid clay, and the like), talcs (for example, talc powder, agalmatolite powder, and the like), silicas (for example, diatomaceous earth, silicic acid anhydride, mica powder, and the like), alumina, sulfur powder, activated charcoal, and the like. These solid carriers may be used either singly or in combination of two or more species

Appropriate carriers for liquid formulations are any liquid that does not adversely affect the active ingredients, for example, water, alcohols (for example, methyl alcohol, ethyl alcohol, ethylene glycol, propylene glycol, diethylene glycol, glycerin, etc.), ketones (for example, acetone, methyl ethyl ketone, etc.), ethers (for example, dioxane, tetrahydrofuran, cellosolve, diethylene glycol dimethyl ether, etc.), aliphatic hydrocarbons (for example, hexane, kerosene, etc.), aromatic hydrocarbons (for example, benzene, toluene, xylene, solvent naphtha, methyl naphthalene, etc.), halogenated hydrocarbons (for example, chloroform, carbon tetrachloride, etc.), acid amides (for example, dimethyl formadide, etc.), esters (for example, methyl acetate ester, ethyl acetate ester, butyl acetate ester, fatty acid glycerin ester, etc.), and nitriles (for example, acetonitrile, etc.). These solvents may be used either singly or in combination of two or more species.

Emulsifiable concentrates of the antifouling compositions according to the present invention can also be obtained upon dilution of the combination of components (I) and (II) with at least a suitable organic solvent (*i.e.* a liquid carrier) followed by the addition of at least a solvent-soluble emulsifying agent. Solvents suitable for this type of formulation are usually water-immiscible and belong to the hydrocarbon, chlorinated hydrocarbon, ketone, ester, alcohol and amide classes of solvents, and they can be properly selected by those skilled in the art based on the solubility's of components (I) and (II) respectively. Emulsifiable concentrates usually contain, in addition to the organic solvent(s), from about 10 to 50% by weight of the combination of active ingredients, from about 2 to 20% of emulsifying agent(s) and up to 20% other additives such as stabilisers, corrosion inhibitors and the like. The combination of components (I) and (II) may also be formulated as a suspension concentrate, which is a stable suspension of the active ingredients in a (preferably organic) liquid intended to be diluted with water before use. In order to obtain such a non-sedimenting flowable product, it is usually necessary to incorporate therein up to about 10% by weight of at least a suspending agent selected from known protective colloids and thixotropic agents. Other liquid formulations like aqueous dispersions and emulsions, for example obtained by diluting a wettable powder or a concentrate (such as previously described) with water, and which may be of the water-in-oil or the oil-in-water type, also lie within the scope of the present invention.

The present invention also provides protective antifouling compositions, for instance in the form of paints, coatings or varnishes, comprising the said combination of components (I) and (II) together with one or more additives suitable for their formulation. The total amount of the combination of components (I) and (II) in such protective compositions may range from 2 to 10% (w/v). Suitable additives for use in said protective compositions are quite conventional in the art and include, for instance, at least an organic binder (preferably in aqueous form) such as an acrylic or vinyl-based emulsion or rosin compounds; mineral carriers such as calcium carbonate; surface-active agents such as previously described; viscosity regulators; corrosion inhibitors; pigments such as titanium dioxide; stabilisers such as sodium benzoate, sodium hexametaphosphate and sodium nitrite; mineral or organic colorants and the like. The ways of formulating such additives together with a component (I) and a component (II) of the present invention is also well within the knowledge of those skilled in the art. Such protective compositions may be used not only to cure and/or limit the damaging effects of fouling organisms but also in order to prevent deterioration to occur on materials which may be subjected to the harmful environment and effects of fouling organisms.

The antifouling compositions according to the present invention can be applied by a number of conventional methods, such as hydraulic spray, air-blast spray, aerial spray, atomising, dusting, scattering or pouring. The most appropriate method will be chosen by those skilled in the art in accordance with the intended objectives and the prevailing circumstances, namely the kind of fouling organism to be controlled, the type of equipment available and the type of material to be protected.

As previously indicated, the combination of components (I) and (II) is preferably applied in the form of compositions wherein both said ingredients are intimately admixed in order to ensure simultaneous administration to the materials to be protected. Administration or application of both components (I) and (II) can also be a "sequential-combined" administration or application, *i.e.* component (I) and component (II) are administered or applied alternatively or sequentially in the same place in such a way that they will necessarily become admixed together at the site to be treated. This will be achieved namely if sequential administration or application takes place within a short period of time e.g. within less than 24 hours, preferably less than 12 hours. This alternative method can be carried out for instance by using a suitable single package comprising at least one container filled with a formulation comprising the active component (I) and at least one container filled with a formulation comprising an active component (II). Therefore the present invention also encompasses a product containing :

- (a)a composition comprising as a component (I) a thiol group modulating enzyme inhibitors selected from dichlofluanid, tolylfluanid, dithane, thiram, ziram, or zineb and
- (b)a composition comprising as a component (II) a pyrion compound selected from 1-hydroxy-2-pyridinone, ciclopirox, ciclopirox olamine, piroctone, piroctone olamine, rilopirox, pyrion disulfide, sodium pyrithione and zinc pyrithione; as a combination for simultaneous or sequential use, wherein said (a) and (b) are in respective proportions to provide a synergistic effect against fouling organisms, fungi or bacteria;

with the proviso that a combination of dichlofluanid as component (I) and sodium pyrithione as component (II) is excluded.

Such products may consist of a suitable package comprising separate containers wherein each container comprises component (I) or component (II), preferably in formulated form. Such formulated forms in general have the same composition as described for the formulations containing both active ingredients.

Experimental part

Experiment 1 : poison plate assay

Name of component (I) :

| | |
|---|---|
| - dichlofluanide (I-a) | - thiram (I-d) |
| - tolylfluanide (I-b) | - ziram (I-e) |
| - dithane (I-c) | - zineb (I-f) |

Name of component (II) :

| | |
|---|---|
| - 1-hydroxy-2-pyridinone (II-a) | - rilopirox (II-f) |
| - ciclopirox (II-b) | - pyrion disulfide (II-g) |
| - ciclopirox olamine (II-c) | - sodium pyrithione (II-h) |
| - piroctone (II-d) | - zinc pyrithione (II-i) |
| - piroctone olamine (II-e) | |

Test models: General procedure : to each well of a 96-well microtiter plate, 300 µl BG11 medium containing the test compounds in one of the concentrations of a 4/3 dose series is added. The liquid freshwater mineral medium is inoculated by adding an aliquot of an actively growing, 3 week old liquid BG11 culture of algae and incubated at 21°C, 65% relative humidity, 1000 Lux 16hr/day. The growth is evaluated after two weeks.

Concentrations: zinc pyrithione combinations: 5.00 - 3.75 - 2.81 - 2.11 - 1.58 - 1.19 - 0.89 - 0.67 - 0.50 - 0.38 - 0.28 - 0.21 ppm
other combinations: 20.00 - 15.00 - 11.25 - 8.44 - 6.33 - 4.75 - 3.56 - 2.67 - 2.00 - 1.50 - 1.13 - 0.84 ppm

| Test combinations : % product A | + | % product B |
|---|---|---|
| 100 | + | 0 |
| 80 | + | 20 |
| 66 | + | 33 |
| 50 | + | 50 |
| 33 | + | 66 |
| 20 | + | 80 |
| 0 | + | 100 |

| | | |
|---|---|---|
| Species of algae : | (1) : *Chlorella vulgaris* | CCAP 211/12 |
| | (2): *Anabaena cylindrica* | CCAP 1403/2A |
| | (3): *Chlamydomonas sphagnophila* | CCAP 11/36E |

Evaluation criteria: The MIC value is reported: the lowest test concentration (in mg/l = ppm) at which complete inhibition of organism growth was observed

MIC values (minimum inhibitory concentration in ppm total active ingredient) were noted and synergy was calculated using the Synergy Index method described by Kull et al. (Kull, F.C., P.C. Eismann, H.D. Sylvestrowicz, and R.L. Mayer (1961) "Mixtures of quaternary ammonium compounds and long-chain fatty acids as antifungal agents" Applied Microbiology 9: 538-541; also see Zwart Voorspuij, A.J., and C.A.G. Nass (1957) "Some aspects of the notions additivity, synergism and antagonism in the simultaneous activity of two antibacterial agents in vitro" Arch. intern. Pharmacodynamie 109: 211-228; Steinberg, D.C. (2000) "Measuring synergy" cosmetics & Toiletries 115(11): 59-62; and Lada, A., A.N. Petrocci, H.A. Green, and J.J. Merianos (1977) "Antimicrobial composition" US Patent 4061750, 3pp.) :

$$\text{Synergy Index (SI)} = \frac{Q_a}{Q_A} + \frac{Q_b}{Q_B}$$

wherein:

- $Q_A$ is the concentration of compound A in ppm, acting alone, which produced an end point (e.g. MIC),
- $Q_a$ is the concentration of compound A in ppm, in the mixture, which produced an end point (e.g. MIC),
- $Q_B$ is the concentration of compound B in ppm, acting alone, which produced an end point (e.g. MIC),
- $Q_b$ is the concentration of compound B in ppm, in the mixture, which produced an end point (e.g. MIC).

When the Synergy Index is greater than 1.0, antagonism is indicated. When the SI is equal to 1.0, additivity is indicated. When the SI is less than 1.0, synergism is demonstrated.

Table 1: MIC-values (minimum inhibitory concentration in ppm) and synergy index of combinations of a thiol group modulating enzyme inhibitor (I) and a pyrion compound(II) tested against *Chlorella vulgaris*

| | ratio (I) to (II) | MIC-values in ppm | Synergy Index |
|---|---|---|---|
| (I-a) + (II-g) | 100 + 0 | 2.67 | - |
| (I-a) + (II-g) | 80 + 20 | 0.63 | 0.25 |
| (I-a) + (II-g) | 66 + 33 | 0.63 | 0.26 |
| (I-a) + (II-g) | 50 + 50 | 0.63 | 0.28 |
| (I-a) + (II-g) | 33 + 66 | 0.63 | 0.29 |
| (I-a) + (II-g) | 20 + 80 | 0.63 | 0.30 |
| (I-a) + (II-g) | 0 + 100 | 2.00 | - |
| (I-b) + (II-g) | 100 + 0 | 2.67 | - |
| (I-b) + (II-g) | 80 + 20 | 0.63 | 0.27 |
| (I-b) + (II-g) | 66 + 33 | 0.63 | 0.30 |
| (I-b) + (II-g) | 50 + 50 | 0.63 | 0.33 |
| (I-b) + (II-g) | 33 + 66 | 0.63 | 0.36 |
| (I-b) + (II-g) | 20 + 80 | 0.63 | 0.38 |
| (I-b) + (II-g) | 0 + 100 | 1.50 | - |
| (I-f) + (II-g) | 100 + 0 | 2.67 | - |
| (I-f) + (II-g) | 80 + 20 | 0.63 | 0.20 |
| (I-f) + (II-g) | 66 + 33 | 0.63 | 0.17 |
| (I-f) + (II-g) | 50 + 50 | 0.63 | 0.13 |
| (I-f) + (II-g) | 33 + 66 | 0.63 | 0.10 |
| (I-f) + (II-g) | 20 + 80 | 0.63 | 0.07 |
| (I-f) + (II-g) | 0 + 100 | 20.00 | - |
| (I-f) + (II-h) | 100 + 0 | 4.75 | - |
| (I-f) + (II-h) | 80 + 20 | 0.63 | 0.11 |
| (I-f) + (II-h) | 66 + 33 | 0.63 | 0.10 |
| (I-f) + (II-h) | 50 + 50 | 0.63 | 0.08 |
| (I-f) + (II-h) | 33 + 66 | 0.63 | 0.07 |
| (I-f) + (II-h) | 20 + 80 | 0.63 | 0.05 |
| (I-f) + (II-h) | 0 + 100 | 20.00 | - |

Table 2: MIC-values (minimum inhibitory concentration in ppm) and synergy index of combinations of a thiol group modulating enzyme inhibitor (I) and a pyrion compound(II) tested against *Anabaena cylindrica*

| | ratio (I) to (II) | MIC-values in ppm | Synergy Index |
|---|---|---|---|
| (I-f) + (II-a) | 100 + 0 | 11.25 | - |
| (I-f) + (II-a) | 80 + 20 | 6.33 | 0.56 |
| (I-f) + (II-a) | 66 + 33 | 6.33 | 0.56 |
| (I-f) + (II-a) | 50 + 50 | 6.33 | 0.56 |
| (I-f) + (II-a) | 33 + 66 | 8.44 | 0.75 |
| (I-f) + (II-a) | 20 + 80 | 8.44 | 0.75 |
| (I-f) + (II-a) | 0 + 100 | 11.25 | - |
| (I-f) + (II-g) | 100 + 0 | 4.75 | - |
| (I-f) + (II-g) | 80 + 20 | 0.63 | 0.12 |
| (I-f) + (II-g) | 66 + 33 | 0.63 | 0.11 |
| (I-f) + (II-g) | 50 + 50 | 0.63 | 0.09 |
| (I-f) + (II-g) | 33 + 66 | 0.63 | 0.08 |
| (I-f) + (II-g) | 20 + 80 | 0.63 | 0.07 |
| (I-f) + (II-g) | 0 + 100 | 11.25 | - |
| (I-f) + (II-h) | 100 + 0 | 6.33 | - |
| (I-f) + (II-h) | 80 + 20 | 0.63 | 0.09 |
| (I-f) + (II-h) | 66 + 33 | 0.63 | 0.09 |
| (I-f) + (II-h) | 50 + 50 | 0.63 | 0.08 |
| (I-f) + (II-h) | 33 + 66 | 0.63 | 0.07 |
| (I-f) + (II-h) | 20 + 80 | 0.63 | 0.06 |
| (I-f) + (II-h) | 0 + 100 | 11.25 | - |

Furthermore the present invention comprises the following items :

1. A composition comprising a combination of a component (I) and a component (II) whereby component (I) and component (II) are in respective proportions to provide a synergistic effect against fouling organisms, fungi or bacteria, wherein component (I) is a thiol group modulating enzyme inhibitor selected from dichlofluanid, tolylfluanid, dithane, thiram, ziram, or zineb; and
wherein component (II) is a pyrion compound selected from 1-hydroxy-2-pyridinone, ciclopirox, ciclopirox olamine, piroctone, piroctone olamine, rilopirox, pyrion disulfide, sodium pyrithione and zinc pyrithione,
with the proviso that a combination of dichlofluanid as component (I) and sodium pyrithione as component (II) is excluded.

2. The composition of claim 1 wherein component (I) is selected from dichlofluanid, tolylfluanid.

3. The composition of claim 1 wherein component (I) is selected from dithane, thiram, ziram, or zineb.

4. The composition as claimed in claim 1 wherein component (II) is selected from 1-hydroxy-2-pyridinone, pyrion disulfide, and sodium pyrithione.

5. The composition as claimed in claim 1 wherein component (I) is selected from dichlofluanid, tolylfluanid or zineb, and component (II) is selected from 1-hydroxy-2-pyridinone, pyrion disulfide, and sodium pyrithione.

6. The composition as claimed in claims 1 to 5 wherein the ratio by weight of component (I) to component (II) ranges from 10:1 to 1:10.

7. The composition as claimed in claim 6 wherein the ratio by weight of component (I) to component (II) ranges from 4:1 to 1:4.

8. The composition as claimed in claim 7 wherein the ratio by weight of component (I) to component (II) ranges from 2:1 to 1:2.

9. The composition according to any of claims 1 to 8 wherein the amount of component (I) is present in a range from 10 to 50.000 mg/l and the amount of component (II) is present in a range from 10 to 50.000 mg/l.

10. Use of a composition according to any of claims 1 to 9 for the control of fouling organisms, fungi or bacteria.

11. A method of protecting materials against fouling organisms, fungi or bacteria,
wherein the said method comprises administration or application of an antifouling effective amount of a composition according to any of claims 1 to 9.

12. A method of disinfecting ballast water by adding an antifouling effective amount of a composition according to any of claims 1 to 9.

13. A process for preparing a synergistic composition as claimed in any of claims 1 to 9, characterized in that the component (I) and the component (II) are intimately mixed with another.

14. A product containing

(a) a composition comprising as a component (I) a thiol group modulating enzyme inhibitors selected from dichlofluanid, tolylfluanid, dithane, thiram, ziram, or zineb; and
(b) a composition comprising as a component (II) a pyrion compound selected from 1-hydroxy-2-pyridinone, ciclopirox, ciclopirox olamine, piroctone, piroctone olamine, rilopirox, pyrion disulfide, sodium pyrithione and zinc pyrithione, as a combination for simultaneous or sequential use, wherein said compositions (a) and (b) are in respective proportions to a synergistic effect against fouling organisms, fungi or bacteria,

with the proviso that a combination of dichlofluanid as component (I) and sodium pyrithione as component (II) is excluded.

## Claims

1. A composition comprising a combination of a component (I) and a component (II) whereby component (I) and component (II) are in respective proportions to provide a synergistic effect against fouling organisms, fungi or bacteria, wherein component (I) is the thiol group modulating enzyme inhibitor zineb; and
wherein component (II) is the pyrion compound zinc pyrithione.

2. The composition as claimed in claim 1 wherein the ratio by weight of component (I) to component (II) ranges from 10:1 to 1:10.

3. The composition as claimed in claim 2 wherein the ratio by weight of component (I) to component (II) ranges from 4:1 to 1:4.

4. The composition as claimed in claim 3 wherein the ratio by weight of component (I) to component (II) ranges from 2:1 to 1:2.

5. The composition according to any of claims 1 to 4 wherein the amount of component (I) is present in a range from 10 to 50000 mg/l and the amount of component (II) is present in a range from 10 to 50000 mg/l.

6. Use of a composition according to any of claims 1 to 5 for the control of fouling organisms, fungi or bacteria.

7. A method of protecting materials against fouling organisms, fungi or bacteria, wherein the said method comprises administration or application of an antifouling effective amount of a composition according to any of claims 1 to 5.

8. A method of disinfecting ballast water by adding an antifouling effective amount of a composition according to any of claims 1 to 5.

9. A process for preparing a synergistic composition as claimed in any of claims 1 to 5, **characterized in that** the component (I) and the component (II) are intimately mixed with another.

Europäisches Patentamt
European Patent Office
Office européen des brevets

# EUROPEAN SEARCH REPORT

Application Number
EP 16 15 5033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE CAPLUS [Online] CHEMICAL ABSTRACTS SERVICE, COLUMBUS, OHIO, US; NAKAE, JUNICHIRO: "Antimicrobial agents as deodorants and preservatives for industrial uses", XP002522938, retrieved from STN Database accession no. 1996:321389 CAS-RN 176953-31-4, -32-5, -34-7; * abstract * & JP 8 092012 A (SENKAWA KK, JAPAN; MITSUBISHI CHEMICAL CORP.) 9 April 1996 (1996-04-09) * paragraphs [0002], [0031], [0039], [0046], [0048] - [0050] * ----- | 1-9 | INV. A01N43/40 A01P1/00 A01P3/00 A01N47/14 A01N59/16 |
| A | EP 1 527 683 A (BAYER CROPSCIENCE SA [FR]) 4 May 2005 (2005-05-04) * claim 1 * ----- | 1-9 | |
| A | GB 2 113 548 A (SHELL INT RESEARCH) 10 August 1983 (1983-08-10) * claim 1 * ----- | 1-9 | TECHNICAL FIELDS SEARCHED (IPC) A01N |
| A | GB 2 208 474 A (ICI PLC [GB]) 5 April 1989 (1989-04-05) * claim 1 * ----- | 1-9 | |
| A | US 5 081 134 A (WHITEKETTLE WILSON K [US] ET AL) 14 January 1992 (1992-01-14) * claims 1-7 * ----- | 1-9 | |

The present search report has been drawn up for all claims

1

| Place of search | Date of completion of the search | Examiner |
|---|---|---|
| Munich | 7 June 2016 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 15 5033

This annex lists the patent family members relating to the patent documents cited in the above-mentioned European search report. The members are as contained in the European Patent Office EDP file on
The European Patent Office is in no way liable for these particulars which are merely given for the purpose of information.

07-06-2016

| Patent document cited in search report | Publication date | Patent family member(s) | Publication date |
|---|---|---|---|
| EP 1527683 A | 04-05-2005 | BR PI0412627 A | 26-09-2006 |
| | | CA 2534029 A1 | 07-07-2005 |
| | | CO 5690505 A2 | 31-10-2006 |
| | | EP 1527683 A1 | 04-05-2005 |
| | | EP 1681926 A1 | 26-07-2006 |
| | | JP 2007509907 A | 19-04-2007 |
| | | KR 20060089235 A | 08-08-2006 |
| | | US 2007072829 A1 | 29-03-2007 |
| | | WO 2005060747 A1 | 07-07-2005 |
| GB 2113548 A | 10-08-1983 | GB 2113548 A | 10-08-1983 |
| | | JP S58128306 A | 30-07-1983 |
| GB 2208474 A | 05-04-1989 | NONE | |
| US 5081134 A | 14-01-1992 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8092012 A
- US 4061750 A, Lada, A., A.N. Petrocci, H.A. Green, and J.J. Merianos


### Non-patent literature cited in the description


- **KULL, F.C. ; P.C. EISMANN ; H.D. SYLVESTROWICZ ; R.L. MAYER.** Mixtures of quaternary ammonium compounds and long-chain fatty acids as antifungal agents. *Applied Microbiology,* 1961, vol. 9, 538-541
- **ZWART VOORSPUIJ, A.J. ; C.A.G. NASS.** Some aspects of the notions additivity, synergism and antagonism in the simultaneous activity of two antibacterial agents in vitro. *Arch. intern. Pharmacodynamie,* 1957, vol. 109, 211-228
- **STEINBERG, D.C.** Measuring synergy. *cosmetics & Toiletries,* 2000, vol. 115 (11), 59-62